# DEMANDE DE BREVET EUROPEEN

(11) **EP 3 677 473 A1**
(43) Date de publication de la demande: **08.07.2020**
(21) Numéro de dépôt: 19217558.6
(22) Date de dépôt: 18.12.2019
(51) Int. Cl.: B60Q 1/26, F21V 8/00, G02B 6/36, F21S 43/27

(54) **ENSEMBLE COMPRENANT UN TISSU ÉCLAIRANT ET UN SUPPORT DE RÉCEPTION DU TISSU ÉCLAIRANT**

(30) Priorité: 18.12.2018 FR 1873263
(71) Demandeur: Compagnie Plastic Omnium, 69007 Lyon (FR)
(72) Inventeur: STABLO, Frédéric, 01150 Sainte-Julie (FR)
(74) Mandataire: LLR

(57) **Abrégé**

L'invention concerne un ensemble (10) pour pièce extérieure de véhicule automobile comprenant un tissu éclairant (20) et un support de réception (30) du tissu éclairant, dans lequel :
- le tissu éclairant (20) comporte des premiers moyens (26) de fixation au support de réception (30) ;
- le support de réception (30) est flexible et comporte des seconds moyens de fixation (34) du tissu éclairant ;
- la flexibilité du support de réception (30) permettant une coopération mécanique des premiers et seconds moyens de fixation (26,34) entre eux pour tendre et fixer sans jeu le tissu éclairant (20) sur le support de réception (30),
et dans lequel le support de réception (30) comporte une zone flexible (36) de réception et de soutien du tissu éclairant (20), ladite zone (36) étant flexible entre une première configuration dépliée A et une seconde configuration pliée B, la distance entre des bords parallèles de la zone de réception et de soutien (36) étant plus faible dans la seconde configuration B que dans la première configuration A, le tissu éclairant (20) étant tendu dans la première configuration A, et le tissu éclairant (20) étant sensiblement en contact avec la zone de réception et de soutien (36) du support de réception (30) dans la première configuration A.

## Description

La présente invention concerne le domaine de l'industrie automobile, et notamment le domaine des pièces de véhicule automobile comportant un dispositif éclairant. Plus précisément, l'invention concerne un ensemble comprenant un tissu éclairant et un support du tissu éclairant destiné à répondre à une fonction d'éclairage, en particulier dans un véhicule.

Des pièces extérieures comportant un dispositif d'éclairage sont prévues sur un véhicule automobile, soit pour améliorer la sécurité comme imposé par des lois ou règlements, soit pour contribuer à l'aspect général extérieur du véhicule. Voici quelques exemples non limitatifs : les feux de croisement, de position, d'arrêt, de recul, de côté, de dépassement, de détresse, d'éclairage de plaque de police, les feux antibrouillards, les clignotants, les phares, les baguettes chromées courant le long de la partie latérale du véhicule, les protections de bas de caisse, le logo d'une marque, les enjoliveurs de poignées de porte, les coques de rétroviseurs.

On connaît déjà des ensembles d'un tissu éclairant et d'un support du tissu éclairant pour pièces de véhicules automobiles, comme décrit par exemple dans les documents WO 2017/115035 A1, US2009/161378A1 et DE 201 08 602 U1. Dans de tels ensembles, le tissu éclairant est généralement fixé sur le support par collage. Cette solution n'est pas satisfaisante car la colle migre dans le tissu et provoque son jaunissement ou son opacification, voire entraîne une perte de son efficacité lumineuse au fil du temps et risque aussi d'aboutir à un décollement du tissu de son support. Une autre solution connue pour fixer le tissu éclairant sur son support est de clipper le tissu, mais compte tenu du nombre de clips nécessaires pour assurer une fixation correcte du tissu sur le support le temps de montage est très long, notamment pour des zones lumineuses de grandes longueurs.

L'invention a notamment pour but de fournir un ensemble comprenant un tissu éclairant et un support du tissu éclairant durable dans le temps et dont la production est rapide et facile.

A cet effet, l'invention a notamment pour objet un ensemble pour pièce extérieure de véhicule automobile comprenant un tissu éclairant et un support de réception du tissu éclairant, dans lequel :
- le tissu éclairant comporte des premiers moyens de fixation au support de réception ;
- le support de réception est flexible et comporte des seconds moyens de fixation du tissu éclairant ;
- la flexibilité du support de réception permet une coopération mécanique des premiers et seconds moyens de fixation entre eux pour tendre et fixer sans jeu le tissu éclairant sur le support de réception,
et dans lequel le support de réception comporte une zone flexible de réception et de soutien du tissu éclairant, ladite zone étant flexible entre une première configuration dépliée et une seconde configuration pliée, la distance entre les bords parallèles de la zone de réception étant plus faible dans la seconde configuration que dans la première configuration, le tissu éclairant étant tendu dans la première configuration, et le tissu éclairant étant sensiblement en contact avec la zone de réception et de soutien du support de réception dans la première configuration.

Ainsi, on propose d'utiliser un ensemble pour une pièce automobile comprenant un tissu éclairant fixé sans colle sur un support, ce qui présente l'avantage d'éviter tous les problèmes liés au vieillissement de la colle avec le temps, et d'améliorer la durabilité de la pièce automobile comprenant cet ensemble. De plus, une fixation entièrement mécanique est avantageuse car elle est plus rapide et plus simple et également moins polluante qu'une fixation par collage. Enfin, ce type de fixation d'un tissu éclairant sur un support permet que le tissu éclairant soit très facilement retiré du support en cas de détérioration, et remplacé par un nouveau tissu éclairant.

L'ensemble d'un tissu éclairant et de son support de réception peut en outre comporter l'une ou plusieurs des caractéristiques suivantes, prises seules ou en combinaison.

Dans la seconde configuration les premiers moyens de fixation sont aptes à s'insérer dans les seconds moyens de fixation, et dans la première configuration les premiers moyens de fixation sont bloqués en position dans les seconds moyens de fixation.

La zone flexible comporte une portion formant ressort, notamment une portion centrale comportant des ondulations. Ainsi, on propose d'utiliser un support de réception d'un tissu éclairant dans lequel la plaque flexible est déformée par la tension du tissu lorsqu'il est mis en place dans la première configuration du support, de sorte que la déformation de la plaque support permet que le tissu soit tendu et plaqué sensiblement complètement sur le support de réception, et ne forme pas de plis qui sont inesthétiques, et nuisent au bon fonctionnement du tissu éclairant.

La zone flexible de réception et de soutien du tissu éclairant, peut être flexible entre la première configuration dépliée, la seconde configuration pliée, et une troisième configuration qui est une configuration de contrainte minimale pour la zone flexible, la configuration dépliée correspondant à une position de la zone flexible intermédiaire entre la configuration pliée et la configuration de contrainte minimale.

Ainsi, le tissu éclairant est sensiblement tendu après mise en place des moyens de fixation, car, quand on relâche le support qui avait été forcé en seconde configuration, le support de fixation du tissu tend à revenir à sa configuration initiale, ou de repos, qui correspond à la troisième configuration. Cependant, le support ne peut pas atteindre cette troisième configuration, du fait qu'il est bloqué par le tissu éclairant fixé grâce aux moyens de fixation dans la première configuration. Le tissu éclairant est alors sensiblement en contact avec les zones « de soutien » du support. L'ensemble comprend un élément de rigidification du support de réception apte à maintenir la zone flexible dans la première configuration, et à maintenir sans jeu le tissu éclairant tendu sur le support de réception, le tissu étant alors bien positionné sur le support et sans pli. Ainsi, on propose d'utiliser des éléments de rigidification permettant de rigidifier la zone flexible et de la maintenir dans la configuration dans laquelle le tissu éclairant est tendu, tout en évitant que la tension sur le tissu éclairant soit trop forte, ce qui pourrait provoquer une détérioration ou une déformation du tissu, ou un mauvais fonctionnement de l'éclairage.

Les premiers moyens de fixations comprennent des œillets placés en bordure du tissu éclairant et les seconds moyens de fixation comportent des créneaux placés en bordure de la plaque flexible, en dehors des zones de « soutien » du support. L'utilisation d'œillets placés dans les bordures du tissu éclairant et de créneaux placés sur les bordures de la plaque flexible présente plusieurs avantages. D'une part, ce sont des moyens de coopération permettant un montage très simple et très rapide du tissu éclairant sur la zone flexible du support de réception. D'autre part il s'agit de moyens de fixation amovible, permettant de retirer le tissu éclairant de son support, pour le remplacer très aisément en cas de détérioration ou de démontage en fin de vie du véhicule par exemple.

Le support de réception est réalisé en matériau polymère thermoplastique, et de préférence en polypropylène. Les polymères thermoplastiques, notamment le polypropylène, possèdent des propriétés mécaniques, et notamment une flexibilité, qui les rendent particulièrement aptes à être utilisés en tant que support de réception d'un tissu éclairant. Le polypropylène est très fréquemment utilisé pour la fabrication des pièces extérieures de véhicule automobile.

Le tissu éclairant comporte des fibres optiques tissées avec des fibres textiles usuelles, telles que du polyéthylène. Pour que ce tissu soit éclairant sur sa surface, ces fibres optiques sont traitées de telle façon à diffuser la lumière radialement.

L'ensemble comprend en outre une protection transparente, translucide ou semi-opaque placée sur le tissu éclairant, à l'opposé du support de réception. La présence d'une protection transparente, translucide ou semi-opaque sur le tissu éclairant permet de le protéger contre les détériorations. Les tissus éclairants sont généralement fragiles, et en l'absence de protection leur durée de vie est réduite.

L'invention a également pour objet une pièce extérieure automobile, et notamment une pièce de carrosserie, comprenant un ensemble comprenant un tissu éclairant et d'un support de réception du tissu éclairant.

L'invention a également pour objet un procédé de montage d'un tissu éclairant sur un support de réception d'un ensemble tel que décrit ci-dessus, le procédé comprenant les étapes de :
a) fixation du tissu éclairant sur un premier côté du support de réception par coopération des moyens de fixation respectifs du tissu et du support ;
b) fixation du tissu éclairant sur un second côté du support de réception par coopération des moyens de fixation respectifs du tissu et du support ;
c) tension du tissu éclairant et fixation de celui-ci sans jeu sur le support de réception ; et
c) blocage du support de réception par un élément de rigidification dans la première configuration A.

Le procédé de montage peut comprendre une étape de fixation de la protection sur le tissu éclairant, la protection pouvant être une pièce de carrosserie d'un véhicule automobile.

### Brève description des figures

L'invention sera mieux comprise à la lecture de la description qui va suivre donnée uniquement à titre d'exemple et faite en se référant aux dessins annexés dans lesquels :
[Fig. 1] est une vue de dessus en perspective illustrant l'ensemble pour pièce de véhicule automobile comprenant un tissu éclairant et un support de réception du tissu éclairant.
[Fig. 2] est une vue de dessous en perspective illustrant le même ensemble que celui de la figure1.
[Fig. 3] est une section latérale illustrant le tissu éclairant et le support de réception du tissu éclairant de l'ensemble de la figure 1, avant assemblage.
[Fig. 4] est une section latérale illustrant le tissu éclairant et le support de réception du tissu éclairant de l'ensemble de la figure 1, pendant l'assemblage du tissu éclairant et du support de réception.
[Fig. 5] est une section latérale illustrant le tissu éclairant et le support de réception du tissu éclairant de l'ensemble de la figure 1, après assemblage du tissu éclairant et du support de réception.
[Fig. 6] est une section latérale illustrant le tissu éclairant et le support de réception du tissu éclairant de l'ensemble de la figure 1, après assemblage du tissu éclairant et du support de réception, et blocage du support de réception par un moyen de verrouillage.
[Fig. 7] est une section latérale de l'ensemble de la figure 6, comprenant en outre une protection transparente.

### Description détaillée

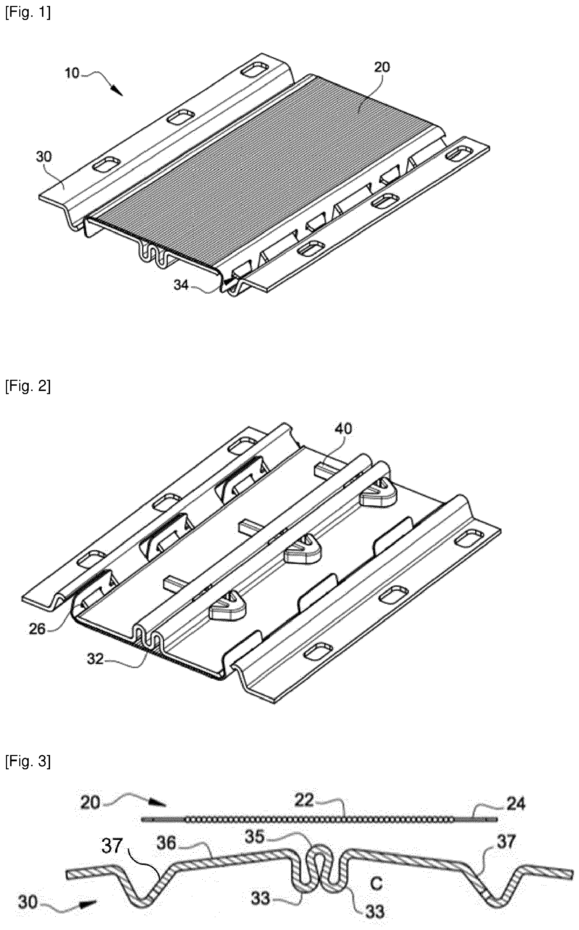

Comme illustré sur les figures 1 à 7, l'ensemble pour pièce de véhicule automobile 10 comprend un tissu éclairant 20 et un support de réception 30 du tissu éclairant 20.

La fonction d'éclairage du tissu éclairant 20 peut être réalisée par des fibres optiques. En général les fibres optiques sont tissées avec des fibres textiles usuelles, les fibres optiques appartenant alors soit aux fils de chaîne ; soit aux fils de trame, ou éventuellement aux deux. Le tissu éclairant, ou tissu électroluminescent, est ainsi uniformément éclairé. Les fibres optiques individuelles peuvent être rassemblées en un faisceau à une extrémité du tissu éclairant 20 et alimentées par une source de lumière. La lumière qui traverse les fibres est émise sur toute la longueur de celles-ci à travers de petits orifices, ou fentes, qui percent le revêtement extérieur, généralement via un traitement spécifique.

Il est entendu que tout autre type de tissu éclairant peut être utilisé en tant que tissu éclairant 20 de l'ensemble 10, par exemple un tissu éclairant dont la fonction d'éclairage est fournie par des diodes électroluminescentes.

Le tissu éclairant 20 comporte une zone éclairante 22 et des premiers moyens de fixation 26, destinés à être fixés au support de réception 30. Le tissu éclairant 20 peut être pourvu de zones de bordure 24 non éclairantes, que l'on dénomme aussi « zones techniques ». Ces zones de bordure 24 peuvent comprendre des renforts pour augmenter la résistance mécanique du tissu éclairant 20. Lorsque le tissu éclairant 20 comprend ces zones de bordure 24 sur au moins deux de ses bordures opposées, les premiers moyens de fixation 26 du tissu éclairant 20 sont généralement placés dans les zones de bordure 24. Les moyens de fixation 26 du tissu éclairant peuvent être des œillets.

Dans le mode de réalisation représenté sur les figures 1 à 7, le support de réception 30 comprend une zone flexible de réception 36 du tissu éclairant. Cette zone flexible de réception 36 est une plaque flexible dont les dimensions sont sensiblement similaires à celles de la zone éclairante 22 du tissu éclairant 20. Le support de réception 30 comprend également des zones de bordure 37 de la zone flexible de réception 36, sur au moins deux des bords de la zone flexible de réception 36. Des moyens de fixation 34 destinés à coopérer avec les moyens de fixation 26 du tissu éclairant 20 sont placés dans cette zone 37. Les moyens de fixation 34 peuvent être des créneaux.

On comprend que les moyens de fixation 26, 34 ne sont pas limités à ce qui est décrit ci-dessus. Tous les « couples » de moyens mécaniques aptes à coopérer entre eux et permettant une installation facile, rapide et sure du tissu éclairant 20 sur le support de réception 30 peuvent être utilisés.

Le support de réception 30 du tissu éclairant 20 est flexible, c'est-à-dire qu'il peut être déformé pour permettre l'installation du tissu éclairant 20 sur le support 30. La flexibilité du support de réception 30 permet une coopération mécanique des premiers moyens de fixation 26 et des seconds moyens de fixation 34 entre eux pour tendre et fixer sans jeu le tissu éclairant 20 sur le support de réception 30.

La flexibilité du support de réception 30 est obtenue grâce à une définition appropriée de la forme du support, comme cela est décrit plus en détail ci-dessous.

Le support de réception 30 est généralement fabriqué en matériaux polymères thermoplastiques, qui possèdent une flexibilité appropriée. Le polypropylène convient particulièrement bien, d'autant plus que le support de réception est avantageusement fabriqué par moulage par injection, cependant tout autre type de polymère thermoplastique ou de mélange de polymères thermoplastiques peut être utilisé.

Dans un mode de réalisation, le support de réception 30 présente une zone de flexibilité ou zone flexible de réception 36 qui permet une installation facile du tissu éclairant 20. La flexibilité peut être fournie plus particulièrement par une portion 32, généralement placée dans une partie centrale de la zone flexible de réception 36, et formant ressort. Dans le mode de réalisation des figures 1 à 7, la portion 32 formant ressort comprend des ondulations, ou plis sinueux 33, 35. Cependant, on comprend d'une part que cette portion formant ressort 32 n'est pas obligatoire, d'autre part qu'elle n'est pas obligatoirement placée dans la partie centrale de la zone flexible de réception 36, et on comprend également que tout autre moyen augmentant de manière adéquate la flexibilité du support pour permettre le montage du tissu éclairant 22 convient.

Avantageusement, avant installation du tissu éclairant 20 sur le support de réception 30, la zone flexible de réception 36 peut se trouver en position de repos ou de contrainte minimale, ainsi que cela est représenté sur la figure 3. Cette configuration de repos est, dans le cas d'une pièce injectée, une forme « sortie de moulage ».

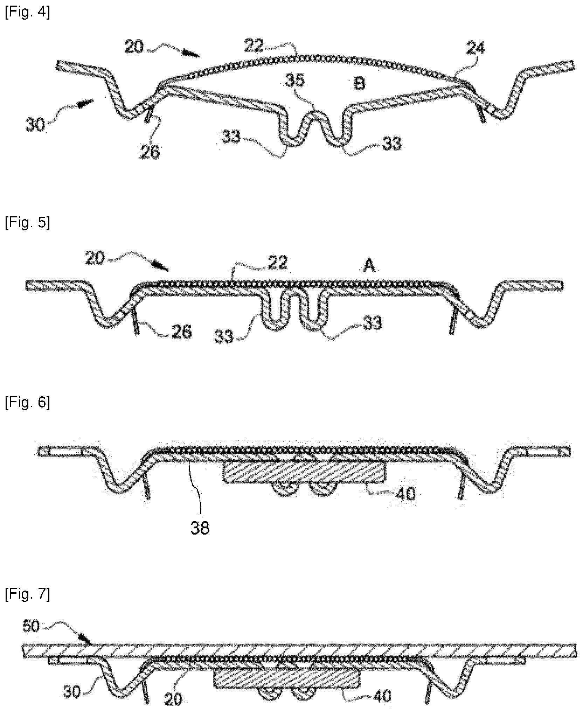

La zone flexible de réception 36 est mobile entre une première configuration dépliée A visible sur la figure 5, et une seconde configuration pliée B, visible sur la figure 4. Dans la seconde configuration pliée B, la distance entre les bords 37 de la zone flexible de réception 36 est inférieure à la distance entre les bords 37 de la zone flexible de réception 36 de la première configuration dépliée A. Cela permet une installation facile du tissu éclairant sur le support de réception, et cela permet également que, lorsque le support est en configuration dépliée A, le tissu éclairant 20 soit bien tendu sans jeu sur le support 30.

Dans la seconde configuration pliée B, les moyens de fixation 26 du tissu éclairant 10 coopèrent avec les moyens de fixation 34 du support de réception 30, mais « sans blocage » ou « avec du jeu ». Dans la première configuration dépliée A, les moyens de fixation 26,34 sont bloqués l'un avec l'autre.

Il est à noter que, du fait de son élasticité, le support de réception 30 peut prendre une troisième configuration C, correspondant à sa position de repos, visible sur la figure 3, dans laquelle la zone flexible de réception 36 a une surface supérieure convexe. Cette capacité permet qu'après montage le tissu éclairant 20 soit bien tendu sur le support 30.

Dans un mode de réalisation, la troisième configuration C est confondue avec la première configuration dépliée A.

La portion 32 formant ressort et comprenant des ondulations 33,35 est au repos, ou en état de contrainte minimale, dans la configuration C, et elle est dans sa position de contrainte la plus élevée dans la position A. La position B est une position intermédiaire. Ainsi, l'action du ressort va pousser la zone flexible de réception 36 de la configuration A vers la configuration C, la zone flexible de réception 36 ne pourra pas se déformer au-delà de la position B lorsque le tissu est en place. La présence de ces trois configurations permet qu'après montage le tissu éclairant 20 soit bien tendu sur le support 30.

Comme cela est visible sur les figures 2, 6 et 7, des éléments de rigidification 40 du support de réception 30 peuvent être fixés sur la face 38 de la zone flexible de réception 36. Ces éléments de rigidification 40 sont aptes à maintenir la zone flexible de réception 36 dans une configuration telle que le tissu éclairant 20 est maintenu tendu et sans jeu sur le support 30, généralement la première configuration A. Ces éléments de rigidification peuvent être des ancres de verrouillage 40, visibles sur la figure 2, qui s'insèrent dans les ondulations 33,35 de la portion formant ressort 32.

L'ensemble 10 pour pièce automobile est bien adapté au montage dans des éléments de carrosserie automobile extérieurs. Plus particulièrement, du fait de la rapidité et de la facilité de montage du tissu éclairant 20 sur le support de réception 30, l'ensemble 10 est très bien adapté pour des pièces de carrosserie allongées et de grande dimension, telles que des pare-chocs. L'ensemble 10 peut également être utilisé, de manière non limitative, dans les feux de croisement, de position, d'arrêt, de recul, de côté, de dépassement, de détresse, d'éclairage de plaque de police, les feux antibrouillards, les clignotants, les phares, les baguettes chromées courant le long de la partie latérale du véhicule, les protections de bas de caisse, le logo d'une marque, les enjoliveurs de poignées de porte, les coques de rétroviseurs. Par extension, toutes les pièces de la carrosserie visibles de l'extérieur avec une fonction d'éclairage peuvent entrer dans le champ d'application de l'invention.

Nous allons maintenant décrire le procédé de montage de l'ensemble 10 pour pièce automobile.

Dans une première étape, représentée à la figure 3, on approche le tissu éclairant 20 et le support de réception 30. Le support de réception se trouve dans la troisième configuration C de la figure 3. Cette troisième configuration C correspond à la position de repos du support de réception, et plus particulièrement à la position de repos de la portion formant ressort 32.

Dans une seconde étape, représentée à la figure 4, on déforme le support de réception 30 de sorte qu'il se trouve dans la seconde configuration B, et on fixe le tissu éclairant 20 sur le support 30, à l'aide des moyens de fixation respectifs 26 et 34.

Dans une troisième étape, représentée à la figure 5, on déforme le support de réception 30 de sorte qu'il se trouve dans la première configuration A. Plus précisément, le support de réception 30 tend à retourner par élasticité vers la configuration C qui est sa position de repos, mais le tissu éclairant 20 bloque le support de réception dans la configuration A. Ceci a pour effet de tendre le tissu éclairant 20 et de le fixer sans jeu sur le support de réception 30. A la fin de cette dernière étape, les moyens de fixation 26 et 34 sont de préférence sensiblement en position de blocage mécanique l'un avec l'autre.

Dans une quatrième étape optionnelle, représentée à la figure 6, on bloque le support de réception 30 grâce à la fixation d'éléments de rigidification 40, qui peuvent être des ancres de verrouillage. Cela a pour effet de maintenir le support 30 dans la première configuration A, tout en évitant que le tissu éclairant 20 subisse une tension mécanique trop importante qui risquerait de l'endommager. En effet, en l'absence d'éléments de rigidification 40, c'est le tissu éclairant 20 qui retient le support de réception 30 dans la configuration A et l'empêche de retrouver la configuration C qui correspond à sa position de repos.

Dans une cinquième étape optionnelle, représentée à la figure 7, on place une protection 50 transparente, translucide ou semi-opaque sur la face du tissu éclairant 20, située à l'opposé du support de réception 30.

L'invention n'est pas limtée aux modes de réalisation présentés et d'autres modes de réalisation apparaîtront clairement à l'homme du métier. Notamment, la forme générale du support de réception 30 pourra être différente de ce qui est représenté sur les figures, en particulier cette forme n'est pas limitée à un rectangle.

## Revendications

1. Ensemble (10) pour pièce extérieure de véhicule automobile comprenant un tissu éclairant (20) et un support de réception (30) du tissu éclairant, dans lequel :
- le tissu éclairant (20) comporte des premiers moyens (26) de fixation au support de réception (30),
- le support de réception (30) est flexible et comporte des seconds moyens de fixation (34) du tissu éclairant
- la flexibilité du support de réception (30) permettant une coopération mécanique des premiers et seconds moyens de fixation (26,34) entre eux pour tendre et fixer sans jeu le tissu éclairant (20) sur le support de réception (30),
**caractérisé en ce que** le support de réception (30) comporte une zone flexible (36) de réception et de soutien du tissu éclairant (20), ladite zone (36) étant flexible entre une première configuration dépliée A et une seconde configuration pliée B, la distance entre des bords parallèles de la zone de réception et de soutien (36) étant plus faible dans la seconde configuration B que dans la première configuration A, le tissu éclairant (20) étant tendu dans la première configuration A, et le tissu éclairant (20) étant sensiblement en contact avec la zone de réception et de soutien (36) du support de réception (30) dans la première configuration A.

2. Ensemble (10) selon la revendication précédente, dans lequel la zone flexible (36) de réception et de soutien du tissu éclairant (20), est flexible entre la première configuration dépliée A, la seconde configuration pliée B, et une troisième configuration C qui est une configuration de contrainte minimale pour la zone flexible (36), la configuration A correspondant à une position de la zone flexible intermédiaire entre la configuration B et la configuration C.

3. Ensemble (10) selon la revendication 1 ou 2, dans lequel dans la seconde configuration B les premiers moyens de fixation (26) sont aptes à s'insérer dans les seconds moyens de fixation (34), et dans la première configuration A les premiers moyens de fixation (26) sont bloqués en position dans les seconds moyens de fixation (34).

4. Ensemble (10) selon l'une des revendications 2 à 3, dans lequel la zone flexible (36) de réception et de soutien comporte une portion (32) formant ressort, notamment une portion centrale comportant des ondulations (33,35).

5. Ensemble (10) selon l'une quelconque des revendications 2 à 4, comprenant un élément de rigidification (40) du support de réception (20) apte à maintenir la zone flexible (36) dans la première configuration A.

6. Ensemble (10) selon l'une quelconque des revendications 2 à 5, dans lequel les premiers moyens de fixations (26) comprennent des œillets placés en bordure (24) du tissu éclairant (20) et les seconds moyens de fixation (34) comporte des créneaux (34) placés en bordure extérieure (37) de la zone flexible (36) de réception et de soutien du tissu éclairant (20).

7. Ensemble (10) selon l'une quelconque des revendications précédentes, dans lequel le support de réception (30) est réalisé en matériau polymère thermoplastique, et de préférence en polypropylène.

8. Ensemble (10) selon l'une quelconque des revendications précédentes, dans lequel le tissu éclairant (2) comporte des fibres optiques tissées avec des fibres textiles usuelles, et de préférence du polyéthylène.

9. Ensemble (10) selon l'une quelconque des revendications précédentes, comportant en outre une protection (50) transparente, translucide ou semi-opaque placée sur le tissu éclairant (20), à l'opposé du support de réception (30).

10. Pièce automobile extérieure, notamment pièce de carrosserie, comprenant un ensemble (10) d'un tissu éclairant (20) et d'un support de réception (30) du tissu éclairant selon l'une des revendications précédentes.

11. Procédé de montage d'un tissu éclairant (20) sur un support de réception (30) d'un ensemble (10) de l'une quelconque des revendications 1 à 9, comprenant les étapes de
a) Fixation du tissu éclairant (20) sur un premier côté du support de réception (30) par coopération entre les premiers et seconds moyens de fixation (26,34),
b) Fixation du tissu éclairant (20) sur un second côté du support de réception (30) par coopération entre les premiers et seconds moyens de fixation (26,34),
c) Tension du tissu éclairant (20) et fixation de celui-ci sans jeu sur le support de réception (30), et
d) Blocage du support de réception (30) par un élément de rigidification (40) dans la première configuration A.

12. Procédé de montage selon la revendication précédente d'un ensemble (10) selon la revendication 8, comprenant une étape de fixation de la protection (50) sur le tissu éclairant (20), la protection (50) pouvant être une pièce de carrosserie d'un véhicule automobile.
